# EUROPEAN PATENT SPECIFICATION

(11) **EP 1 930 222 B1**
(45) Date of publication and mention of the grant of the patent: **20.01.2010**
(21) Application number: 07121160.1
(22) Date of filing: 20.11.2007
(51) Int. Cl.: B60W 30/02

(54) **Method for providing stability control for a vehicle**
Verfahren zur Ermöglichung der Stabilitätskontrolle eines Fahrzeugs
Procédé fournissant le contrôle de la stabilité pour un véhicule

(30) Priority: 08.12.2006 US 636002
(43) Date of publication of application: 11.06.2008
(73) Proprietor: Delphi Technologies, Inc., Troy, Michigan 48007 (US)
(72) Inventor: O'Dea, Kevin A., Ann Arbor, MI 48105 (US); Check, Michael J., Ann Arbor, MI 48105 (US)
(74) Representative: Denton, Michael John

(56) References cited:
- EP-A- 0 958 978
- EP-A- 1 640 231
- WO-A-2006/129820
- US-A1- 2002 153 770
- US-A1- 2005 012 391
- US-B1- 6 179 394
- US-B1- 6 453 226

## Description

### TECHNICAL FIELD

The present invention relates generally to vehicle control systems, and more particularly to a method for providing stability control for a vehicle.

### BACKGROUND OF THE INVENTION

Conventional vehicle electronic control systems: calculate a desired yaw rate using steer angle, lateral acceleration and vehicle speed; filter the desired yaw rate using a first order filter having a tau damping value based on vehicle speed; calculate a desired speed difference between the left and right wheels using the filtered desired yaw rate, sensed yaw rate, estimated surface friction and vehicle speed; and apply the desired speed difference to the left and right wheels (by individualized four-wheel braking).

What is needed is an improved method for providing stability control for a vehicle having left and right wheels. US 6 453 226 B1, mentioned as the closest prior art, discloses a method for providing stability control for a vehicle having left and right wheels comprising:
a) Calculating a modified desired yaw rate for the vehicle using steer angle, vehicle speed, lateral acceleration, and estimated surface friction;
b) Calculating a modified desired speed difference between the left and right wheels using the modified desired yaw rate, the estimated surface friction, the vehicle speed, and sensed yaw rate; and
c) Applying the modified desired speed difference to the left and right wheels.

### SUMMARY OF THE INVENTION

A first method of the invention is for providing stability control for a vehicle having left and right wheels and includes calculating a modified desired yaw rate for the vehicle using steer angle, steer angle rate, steer transition state, steer transition time, vehicle speed, lateral acceleration, and estimated surface friction. The first method also includes calculating a modified desired speed difference between the left and right wheels using the modified desired yaw rate, the steer angle rate, roll angle rate, the estimated surface friction, the vehicle speed, and sensed yaw rate. The first method also includes applying the modified desired speed difference to the left and right wheels.

A second method of the invention is for providing stability control for a vehicle having left and right wheels. The second method includes calculating a modified desired yaw rate for the vehicle using steer angle, steer angle rate, steer transition state, steer transition time, vehicle speed, lateral acceleration, and estimated surface friction. The second method also includes calculating an initial desired speed difference between the left and right wheels using the modified desired yaw rate, the estimated surface friction, the vehicle speed, and sensed yaw rate. The second method also includes applying the initial desired speed difference to the left and right wheels.

A third method of the invention is for providing stability control for a vehicle having left and right wheels. The third method includes calculating a filtered initial desired yaw rate for the vehicle using steer angle, vehicle speed, and lateral acceleration. The third method also includes calculating a modified desired speed difference between the left and right wheels using the filtered initial desired yaw rate, the steer angle rate, roll angle rate, the estimated surface friction, the vehicle speed, and sensed yaw rate. The third method also includes applying the modified desired speed difference to the left and right wheels.

Several benefits and advantages are derived from one or more of the methods of the invention. In one example, after certain steering reversals by the driver with high steering angle rates, the initial desired yaw rate is limited for some time after the event to reduce the yaw rate overshoot. In the same or a different example, during certain maneuvers involving high steer angle rates, damping of the desired yaw rate is increased to slow the response of the vehicle control to inputs from the driver for increased vehicle stability. In the same or a different example, during certain maneuvers involving high roll angle rates and high steer angle rates, the vehicle control term (i.e., the desired speed difference) is offset by a function of the roll angle rate and the vehicle speed and is offset by a function of the steer angle rate and the vehicle speed for increased vehicle stability.

### BRIEF DESCRIPTION OF THE DRAWINGS

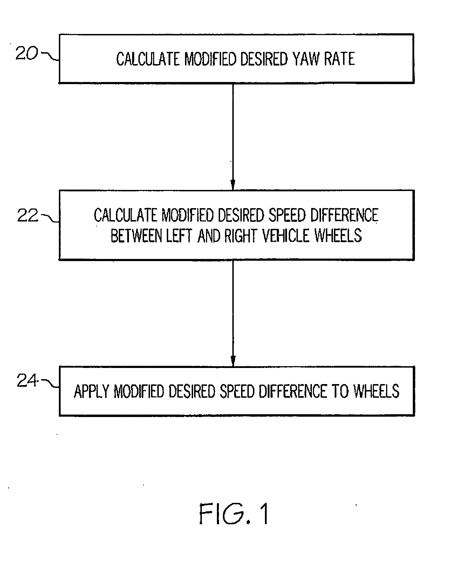

Figure 1 is a flow chart of one example of a first method of the invention for providing stability control for a vehicle which calculates a modified desired yaw rate, which calculates a modified desired speed difference between the left and right wheels of the vehicle, and which applies the modified desired speed difference to the left and right wheels;

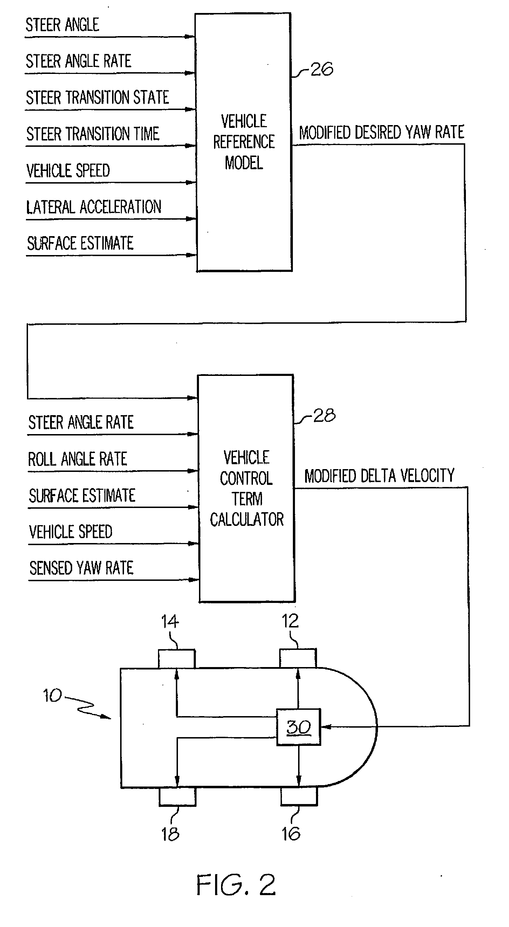

Figure 2 is a block diagram showing a vehicle reference model having various inputs and having the modified desired yaw rate mentioned in figure 1 as an output and showing a vehicle control term calculator (modified desired speed difference calculator) having various inputs including the modified desired yaw rate and having the modified desired speed difference mentioned in figure 1 as an output;

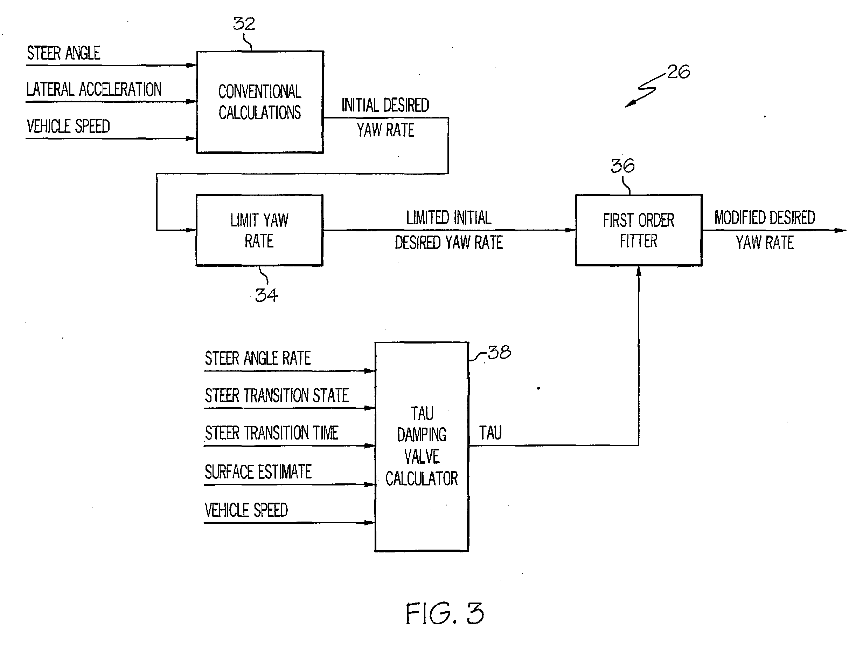

Figure 3 is a block diagram showing details of the vehicle reference model of figure 2 including an initial desired yaw rate calculator (labeled conventional calculations in figure 2), a yaw rate limit calculator, a tau damping value calculator, and a first order filter having the calculated tau damping value;

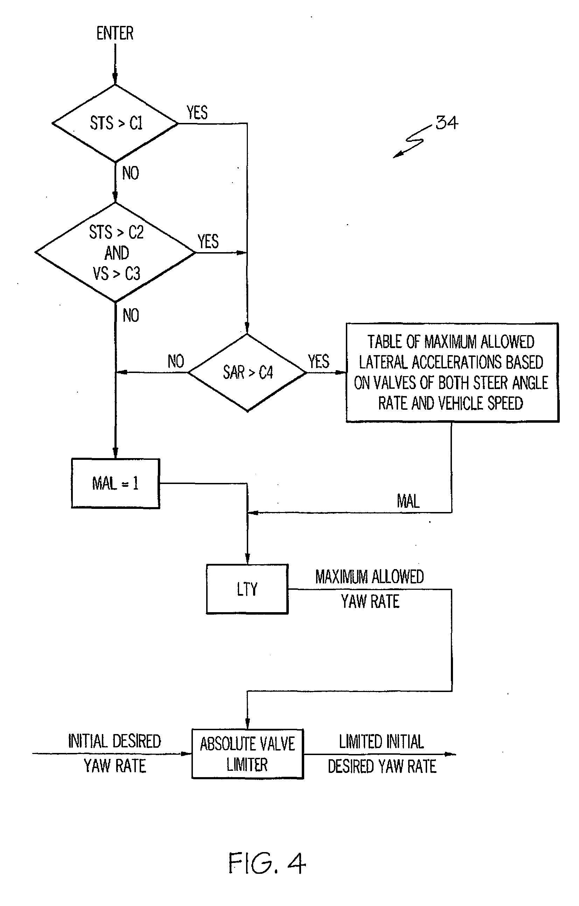

Figure 4 is a block diagram showing details of the yaw rate limit calculator of figure 3;

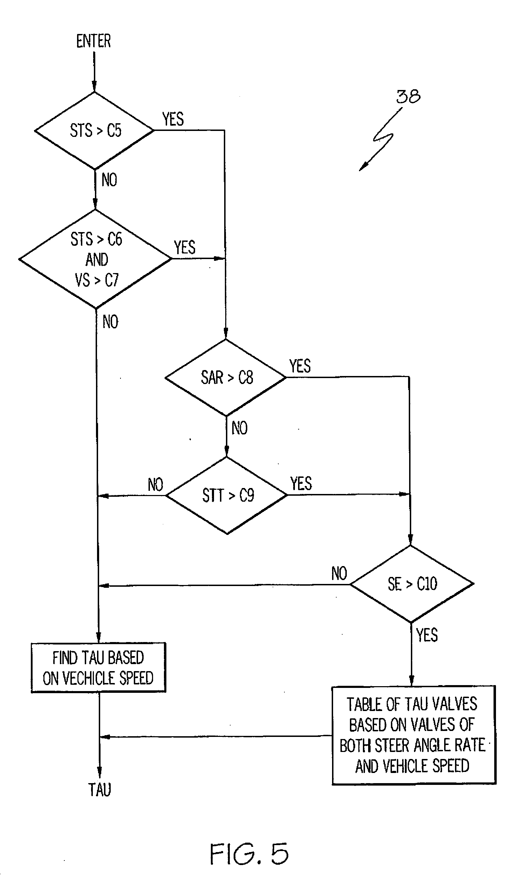

Figure 5 is a block diagram showing details of the tau damping value calculator of figure 3;

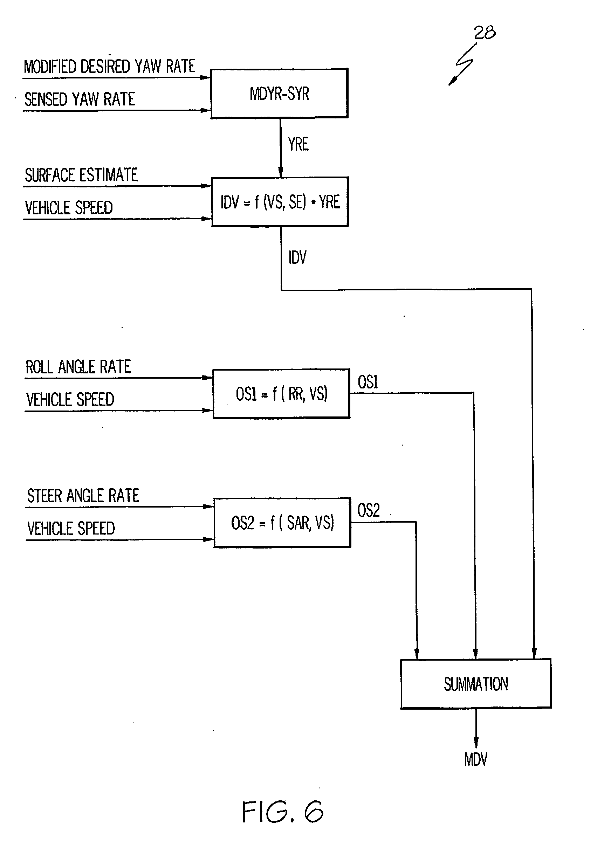

Figure 6 is a block diagram showing details of the vehicle control term calculator of figure 2 including the calculation of an initial desired speed difference;

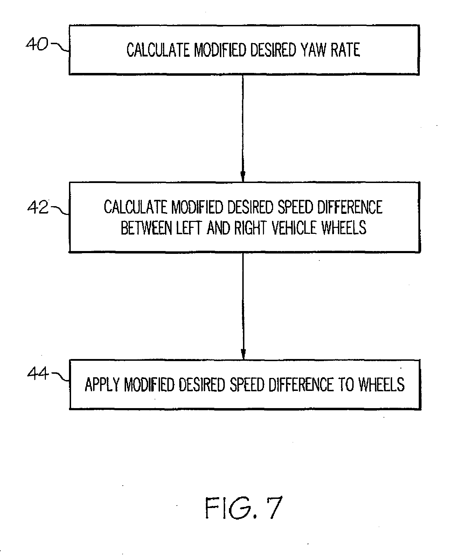

Figure 7 is a flow chart of one example of a second method of the invention which calculates a modified desired yaw rate, which calculates an initial desired speed difference between the left and right wheels of the vehicle, and which applies the initial desired speed difference to the left and right wheels; and

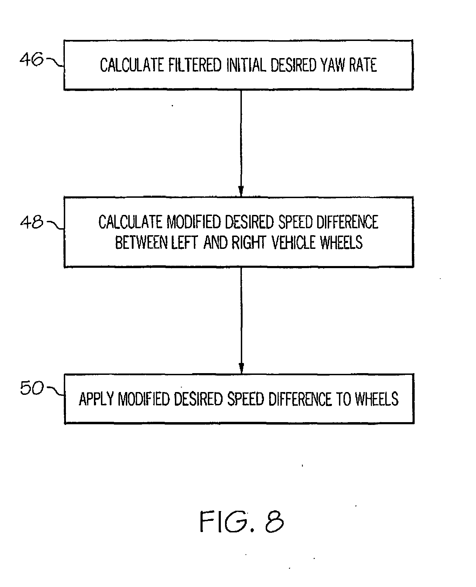

Figure 8 is a flow chart of one example of a third method of the invention which calculates a filtered initial desired yaw rate, which calculates a modified desired speed difference between the left and right wheels of the vehicle, and which applies the modified desired speed difference to the left and right wheels.

### DESCRIPTION OF THE PREFERRED EMBODIMENT

Referring to Figures 1 through 6, a first method of the invention is for providing stability control for a vehicle 10 having left and right wheels 12 & 14 and 16 & 18 and includes steps a) through c). Step a) is labeled as "Calculate Modified Desired Yaw Rate" in block 20 of figure 1. Step a) includes calculating a modified desired yaw rate (see figure 2) for the vehicle using steer angle, steer angle rate, steer transition state, steer transition time, vehicle speed, lateral acceleration, and estimated surface friction (called "Surface Estimate" in the figures). Step b) is labeled as "Calculate Modified Desired Speed Difference Between Left And Right Vehicle Wheels" in block 22 of figure 1. Step b) includes calculating a modified desired speed difference between the left and right wheels 12 & 14 and 16 & 18 (see figures 2 and 6 wherein such modified desired speed difference is called "Modified Delta Velocity" or "MDV") using the modified desired yaw rate, the steer angle rate, roll angle rate, the estimated surface friction, the vehicle speed, and sensed yaw rate. Step c) is labeled as "Apply Modified Desired Speed Difference To Wheels" in block 24 of figure 1. Step c) includes applying the modified desired speed difference to the left and right wheels 12 & 14 and 16 & 18 (see figure 2).

In one enablement of the first method, step a) uses a vehicle reference model 26 having steer angle, steer angle rate, steer transition state, steer transition time, vehicle speed, lateral acceleration, and estimated surface friction as inputs and having the modified desired yaw rate as an output (see figures 2 and 3). In the same or a different enablement, step b) uses a vehicle control term calculator 28 having the modified desired yaw rate, the steer angle rate, roll angle rate, the estimated surface friction, the vehicle speed, and sensed yaw rate as inputs and having the modified desired speed difference between the left and right wheels 12 & 14 and 16 & 18 (also called "Modified Delta Velocity" and "MDV") as an output (see figures 2 and 6). In the same or a different enablement, step c) supplies the modified desired speed difference ("modified Delta Velocity" or "MDV") to a brake system controller 30 adapted to apply brake signals to individually brake each of the left and right wheels 12 & 14 and 16 & 18 to achieve the modified desired speed difference ("Modified Delta Velocity" or "MDV"). In figure 2, the un-labeled arrowed lines from the brake system controller 30 to the wheels 12, 14, 16 and 18 schematically represent such brake signals. In one example, input signals are filtered as appropriate to reduce noise.

Steer transition state is a count of the number of times the driver reverses steering direction for a predetermined minimum steer angle reversal and a predetermined minimum steer angle reversal rate. Steer transition time is the time in one steer transition state. In one example, estimated surface friction (called "Surface Estimate" in the figures) has a value of 0.1 for a dry surface and 1.0 for ice. The remaining inputs (e.g., angles, rates, speed and acceleration) are obtainable by those skilled in the art from a suitably instrumented vehicle.

In a first employment of the first method, step a) includes calculating an initial desired yaw rate using the steer angle, the lateral acceleration, and the vehicle speed as is conventionally done in calculating a conventional desired yaw rate, such as by using conventional calculations (represented by block 32 of figure 3).

In one variation, step a) includes limiting the initial desired yaw rate based at least on the steer rate, such limiting of the initial desired yaw rate being represented by block 34 in figure 3 and shown in greater detail in figure 4. In figure 4 (and in all other figures), C1, C2, etc. represent predetermined constants which are obtained from previous vehicle testing and/or vehicle computer simulations for vehicle stability control as is within the ordinary level of skill of the artisan. The absolute value of the initial desired yaw rate is limited. The box labeled "Table Of Maximum Allowed Lateral Accelerations Based on Values Of Both Steer Angle Rate And Vehicle Speed" represents a table of values obtained from previous vehicle testing and/or vehicle computer simulations for vehicle stability control as is within the ordinary level of skill of the artisan. The box labeled "Convert To Maximum Allowed Yaw" represents a conversion that is within the ordinary level of skill of the artisan.

In figure 4, STS is steer transition rate, VS is vehicle speed, SAR is steer angle rate, MAL is maximum allowed lateral acceleration, and LTY is Lateral acceleration To Yaw rate conversion (such conversion being within the ordinary level of skill of the artisan). It is noted that C2 is less than C1.

In one modification, step a) includes calculating a tau damping value of a first order filter 36 using the steer angle rate, the steer transition state, the steer transition time, the estimated surface friction, and the vehicle speed, such as by using a tau damping value calculator (represented by block 38 in figure 3 and shown in greater detail in figure 5). In figure 5, the block labeled "Find Tau Based On Vehicle Speed" represents conventional calculations used for a first order filter for conventionally filtering a conventional desired yaw rate. The box labeled "Table Of Tau Values Based on Values Of Both Steer Angle Rate And Vehicle Speed" represents a table of tau values obtained from previous vehicle testing and/or vehicle computer simulations for vehicle stability control as is within the ordinary level of skill of the artisan.

In figure 5, STS is steer transition rate, VS is vehicle speed, SAR is steer angle rate, STT is steer transition time, and SE is surface estimate. It is noted that C6 is less than C5.

In one illustration, step a) includes calculating the modified desired yaw rate by filtering the limited initial desired yaw rate using a first order filter 36 having the calculated tau damping value (see figure 3).

In the same or a different employment of the first method, and referring to figure 6, step b) includes calculating a yaw rate error equal to the modified desired yaw rate minus the sensed yaw rate and includes calculating an initial desired speed difference between the left and right wheels equal to the calculated yaw rate error times a function of the estimated surface friction and the vehicle speed. Such yaw rate error and initial desired speed difference calculation is conventionally done in calculating a conventional desired yaw rate and a conventional desired speed difference. In one example, the function is expressed as a table.

In figure 6, YRD is modified desired yaw rate, SYR is sensed yaw rate, YRE is yaw rate error, IDV is initial delta velocity which is initial desired speed difference between the left and right vehicle wheels, VS is vehicle speed, SE is surface estimate (estimated surface friction), MDV is modified delta velocity which is modified desired speed difference between the left and right vehicle wheels, RR is roll rate, SAR is steer angle rate, OS1 is a first offset to IDV, and OS2 is a second offset to IDV.

In one application, referring to figure 6, step b) includes calculating the modified desired speed difference as equal to the initial desired speed difference plus a first offset which is a function of the roll angle rate and the vehicle speed plus a second offset which is a function of the steer angle rate and the vehicle speed. In one example, the functions are expressed as tables whose values have been obtained from previous vehicle testing and/or vehicle computer simulations for vehicle stability control as is within the ordinary level of skill of the artisan.

Referring to figure 7 and the vehicle 10 of figure 2, a second method of the invention is for providing stability control for a vehicle 10 having left and right wheels 12 & 14 and 16 & 18. The second method includes steps a) through c). Step a) is labeled as "Calculate Modified Desired Yaw Rate" in block 40 of figure 7. Step a) includes calculating a modified desired yaw rate for the vehicle using steer angle, steer angle rate, steer transition state, steer transition time, vehicle speed, lateral acceleration, and estimated surface friction. Step b) is labeled as "Calculate Initial Desired Speed Difference Between Left And Right Vehicle Wheels" in block 42 of figure 7. Step b) includes calculating an initial desired speed difference between the left and right wheels using the modified desired yaw rate, the estimated surface friction, the vehicle speed, and sensed yaw rate. Step c) is labeled as "Apply Initial Desired Speed Difference To Wheels" in block 44 of figure 7. Step c) includes applying the initial desired speed difference to the left and right wheels.

The employment, modification, etc. of step a) in the first method are equally applicable to step a) in the second method.

Referring to figure 8 and the vehicle 10 of figure 2, a third method of the invention is for providing stability control for a vehicle 10 having left and right wheels 12 & 14 and 16 & 18. The third method includes steps a) through c). Step a) is labeled as "Calculate Filtered Initial Desired Yaw Rate" in block 46 of figure 8. Step a) includes calculating a filtered initial desired yaw rate for the vehicle 10 using steer angle, vehicle speed, and lateral acceleration. Step b) is labeled as "Calculate Modified Desired Speed Difference Between Left And Right Vehicle Wheels" in block 48 of figure 8. Step b) includes calculating a modified desired speed difference between the left and right wheels 12 & 14 and 16 & 18 using the filtered initial desired yaw rate, the steer angle rate, roll angle rate, the estimated surface friction, the vehicle speed, and sensed yaw rate. Step c) is labeled as "Apply Modified Desired Speed Difference To Wheels" in block 50 of figure 8. Step c) includes applying the modified desired speed difference to the left and right wheels 12 & 14 and 16 & 18.

The employment and application of step b) and the employment of step a) in the first method are equally applicable to step b) and step a) in the third method. In one utilization of the third method, step a) includes filtering the initial desired yaw rate using a first order filter having a tau damping value based on vehicle speed.

Several benefits and advantages are derived from one or more of the methods of the invention. In one example, after certain steering reversals by the driver with high steering angle rates, the initial desired yaw rate is limited for some time after the event to reduce the yaw rate overshoot. In the same or a different example, during certain maneuvers involving high steer angle rates, damping of the desired yaw rate is increased to slow the response of the vehicle control to inputs from the driver for increased vehicle stability. In the same or a different example, during certain maneuvers involving high roll angle rates and high steer angle rates, the vehicle control term (i.e., the desired speed difference) is offset by a function of the roll angle rate and the vehicle speed and is offset by a function of the steer angle rate and the vehicle speed for increased vehicle stability:

The foregoing description of several methods of the invention has been presented for purposes of illustration. It is not intended to be exhaustive or to limit the invention to the precise steps disclosed, and obviously many modifications and variations are possible in light of the above teaching. It is intended that the scope of the invention be defined by the claims appended hereto.

## Claims

1. A method for providing stability control for a vehicle having left and right wheels comprising:
a) calculating (20) a modified desired yaw rate for the vehicle using steer angle, steer angle rate, steer transition state, steer transition time, vehicle speed, lateral acceleration, and estimated surface friction;
b) calculating (22) a modified desired speed difference between the left and right wheels using the modified desired yaw rate, the steer angle rate, roll angle rate, the estimated surface friction, the vehicle speed, and sensed yaw rate; and
c) applying (24) the modified desired speed difference to the left and right wheels.

2. The method of claim 1, wherein step a) includes calculating an initial desired yaw rate using the steer angle, the lateral acceleration, and the vehicle speed.

3. The method of claim 2, wherein step a) includes limiting the initial desired yaw rate based at least on the steer rate.

4. The method of claim 3, wherein step a) includes calculating a tau damping value of a first order filter using the steer angle rate, the steer transition state, the steer transition time, the estimated surface friction, and the vehicle speed.

5. The method of claim 4, wherein step a) includes calculating the modified desired yaw rate by filtering the limited initial desired yaw rate using a first order filter having the calculated tau damping valve.

6. The method of claim 5, wherein step b) includes calculating a yaw rate error equal to the modified desired yaw rate minus the sensed yaw rate and calculating an initial desired speed difference between the left and right wheels equal to the calculated yaw rate error times a function of the estimated surface friction and the vehicle speed.

7. The method of claim 6, wherein step b) includes calculating the modified desired speed difference as equal to the initial desired speed difference plus a function of the roll angle rate and the vehicle speed plus a function of the steer angle rate and the vehicle speed.

8. The method of claim 1, wherein step b) includes calculating a yaw rate error equal to the modified desired yaw rate minus the sensed yaw rate and calculating an initial desired speed difference between the left and right wheels equal to the calculated yaw rate error times a function of the estimated surface friction and the vehicle speed.

9. The method of claim 8, wherein step b) includes calculating the modified desired speed difference as equal to the initial desired speed difference plus a function of the roll angle rate and the vehicle speed plus a function of the steer angle rate and the vehicle speed.

## Patentansprüche

1. Verfahren zum Vorsehen einer Stabilitätskontrolle für ein Fahrzeug mit linken und rechten Rädern, das aufweist:
a) Berechnen (20) einer modifizierten gewünschten Gierrate für das Fahrzeug unter Verwendung von Lenkwinkel, Lenkwinkelrate, Lenkübergangsstatus, Lenkübergangszeit, Fahrzeuggeschwindigkeit, Querbeschleunigung und geschätzter Oberflächenreibung;
b) Berechnen (22) einer modifizierten gewünschten Geschwindigkeitsdifferenz zwischen den linken und rechten Rädern unter Verwendung der modifizierten gewünschten Gierrate, der Lenkwinkelrate, der Rollwinkelrate, der geschätzten Oberflächenreibung, der Fahrzeuggeschwindigkeit und der erfassten Gierrate; und
c) Anwenden (24) der modifizierten gewünschten Geschwindigkeitsdifferenz auf die linken und rechten Räder.

2. Verfahren gemäß Anspruch 1, wobei Schritt a) ein Berechnen einer anfänglichen gewünschten Gierrate unter Verwendung des Lenkwinkels, der Querbeschleunigung und der Fahrzeuggeschwindigkeit umfasst.

3. Verfahren gemäß Anspruch 2, wobei Schritt a) ein Begrenzen der anfänglichen gewünschten Gierrate basierend zumindest auf der Lenkrate umfasst.

4. Verfahren gemäß Anspruch 3, wobei Schritt a) ein Berechnen eines Tau-Dämpfungswerts eines Filters erster Ordnung unter Verwendung der Lenkwinkelrate, des Lenkübergangsstatus, der Lenkübergangszeit, der geschätzten Oberflächenreibung und der Fahrzeuggeschwindigkeit umfasst.

5. Verfahren gemäß Anspruch 4, wobei Schritt a) ein Berechnen der modifizierten gewünschten Gierrate durch Filtern der begrenzten anfänglichen gewünschten Gierrate unter Verwendung eines Filters erster Ordnung mit dem berechneten Tau-Dämpfungswert umfasst.

6. Verfahren gemäß Anspruch 5, wobei Schritt b) ein Berechnen eines Gierratefehlers gleich der modifizierten gewünschten Gierrate minus der erfassten Gierrate und ein Berechnen einer anfänglichen gewünschten Geschwindigkeitsdifferenz zwischen den linken und rechten Rädern gleich des berechneten Gierratefehlers mal einer Funktion der geschätzten Oberflächenreibung und der Fahrzeuggeschwindigkeit umfasst.

7. Verfahren gemäß Anspruch 6, wobei Schritt b) ein Berechnen der modifizierten gewünschten Geschwindigkeitsdifferenz als gleich zu der anfänglichen gewünschten Geschwindigkeitsdifferenz plus einer Funktion der Rollwinkelrate und der Fahrzeuggeschwindigkeit plus einer Funktion der Lenkwinkelrate und der Fahrzeuggeschwindigkeit umfasst.

8. Verfahren gemäß Anspruch 1, wobei Schritt b) ein Berechnen eines Gierratefehlers gleich der modifizierten gewünschten Gierrate minus der erfassten Gierrate und ein Berechnen einer anfänglichen gewünschten Geschwindigkeitsdifferenz zwischen den linken und rechten Rädern gleich dem berechneten Gierratefehler mal einer Funktion der geschätzten Oberflächenreibung und der Fahrzeuggeschwindigkeit umfasst.

9. Verfahren gemäß Anspruch 8, wobei Schritt b) ein Berechnen der modifizierten gewünschten Geschwindigkeitsdifferenz als gleich zu der anfänglichen gewünschten Geschwindigkeitsdifferenz plus einer Funktion der Rollwinkelrate und der Fahrzeuggeschwindigkeit plus einer Funktion der Lenkwinkelrate und der Fahrzeuggeschwindigkeit umfasst.

## Revendications

1. Procédé pour assurer le contrôle de stabilité pour un véhicule ayant des roues à gauche et des roues à droite, comprenant les opérations consistant à :
a) calculer (20) un taux de lacet désiré modifié pour le véhicule en utilisant l'angle de direction, le taux angulaire de direction, l'état de transition de direction, le temps de transition de direction, la vitesse du véhicule, l'accélération latérale, et la friction de surface estimée ;
b) calculer (22) une différence de vitesse désirée modifiée entre les roues à gauche et les roues à droite en utilisant le taux de lacet désiré modifié, le taux angulaire de direction, le taux angulaire de roulis, la friction de surface estimée, la vitesse du véhicule, et le taux de lacet détecté ; et
c) appliquer (24) la différence de vitesse désirée modifiée aux roues à gauche et aux roues à droite.

2. Procédé selon la revendication 1, dans lequel l'étape a) inclut de calculer un taux de lacet désiré initial en utilisant l'angle de direction, l'accélération latérale, et la vitesse du véhicule.

3. Procédé selon la revendication 2, dans lequel l'étape a) inclut de limiter le taux de lacet désiré initial en se basant au moins sur le taux de direction.

4. Procédé selon la revendication 3, dans lequel l'étape a) inclut de calculer une valeur d'amortissement tau d'un filtre de premier ordre en utilisant le taux angulaire de direction, l'état de transition de direction, le temps de transition de direction, la friction de surface estimée, et la vitesse du véhicule.

5. Procédé selon la revendication 4, dans lequel l'étape a) inclut de calculer le taux de lacet désiré modifié par filtrage du taux de lacet désiré initial limité en utilisant un filtre de premier ordre ayant la valeur d'amortissement tau calculée.

6. Procédé selon la revendication 5, dans lequel l'étape b) inclut de calculer une erreur de taux de lacet égale au taux de lacet désiré modifié diminué du taux de lacet détecté, et de calculer une différence de vitesse désirée initiale entre les roues à gauche et les roues à droite, égale à l'erreur de taux de lacet calculée multipliée par une fonction de la friction de surface estimée et de la vitesse du véhicule.

7. Procédé selon la revendication 6, dans lequel l'étape b) inclut de calculer la différence de vitesse désirée modifiée comme étant égale à la différence de vitesse désirée initiale plus une fonction du taux d'angle de roulis et de la vitesse du véhicule plus une fonction du taux angulaire de direction et de la vitesse du véhicule.

8. Procédé selon la revendication 1, dans lequel l'étape b) inclut de calculer une erreur du taux de lacet égale au taux de lacet désiré modifié diminué du taux de lacet détecté, et de calculer une différence de vitesse désirée initiale entre les roues à gauche et les roues à droite, égale à l'erreur du taux de lacet calculée multipliée par une fonction de la friction de surface estimée et de la vitesse du véhicule.

9. Procédé selon la revendication 8, dans lequel l'étape b) inclut de calculer la différence de vitesse désirée modifiée comme étant égale à la différence de vitesse désirée initiale plus une fonction du taux angulaire de roulis et de la vitesse du véhicule, plus une fonction du taux angulaire de direction et de la vitesse du véhicule.
